# EUROPÄISCHE PATENTSCHRIFT

(11) **EP 0 705 533 B1**
(45) Veröffentlichungstag und Bekanntmachung des Hinweises auf die Patenterteilung: **23.05.2001**
(21) Anmeldenummer: 95115311.3
(22) Anmeldetag: 28.09.1995
(51) Int. Cl.: A01C 7/12, A01C 15/14

(54) **Dosiervorrichtung**
Dosing apparatus
Dispositif de dosage

(30) Priorität: 07.10.1994 DE 4435851; 19.12.1994 DE 4445315
(43) Veröffentlichungstag der Anmeldung: 10.04.1996
(73) Patentinhaber: Amazonen-Werke H. Dreyer GmbH & Co. KG, 49205 Hasbergen (DE)
(72) Erfinder: Dreyer, Heinz, Dr. Dipl.-Ing., D-49205 Hasbergen (DE)

(56) Entgegenhaltungen:
- CA-A- 1 149 235
- DE-A- 4 415 603

## Beschreibung

Die Erfindung betrifft eine Dosiervorrichtung gemäß der Oberbegriffe der Patentansprüches 1.

Eine derartige Dosiervorrichtung ist in der Anmeldung DE-44 15 603 beschrieben.

Der Erfindung liegt die Aufgabe zugrunde, diese Dosiervorrichtung weiterzubilden.

Dieses läßt sich dadurch erreichen, daß die den Dosierrädern zugeordneten Hohlwellen einstückig mit den Dosierrädern verbunden sind. Hierdurch ergibt sich eine äußerst preiswerte Herstellung der Dosiervorrichtung. Eine weitere Vereinfachung der Dosiervorrichtung läßt sich dadurch erreichen, daß das Antriebselement des einen Dosierrades einstückig mit der Hohlwelle verbunden ist. Hierbei ergibt sich eine besonders vorteilhafte Ausbildung dadurch, daß daß die den Dosierrädern zugeordneten Hohlwellen als Hälse und nach außerhalb des Dosiergehäuses ragend ausgebildet sind.

Eine einfache Abschaltung bzw. Kupplung der Dosierräder mit der Antriebswelle läßt sich dadurch erreichen, daß zumindest einem oder jedem Dosierrad ein Kupplungselement zugeordnet ist, welches in radialer Richtung zum Ein- und Abschalten des Dosierrades verschiebbar oder verlagerbar ist. Hierdurch wird eine einfache und preiswerte Abschaltung der Dosierräder geschaffen. Das Kupplungselement kann als Stiftschraube oder Schiebestift ausgebildet sein. In der herausgezogenen oder herausgedrehter Stellung wirkt das Kupplungselement als Feststellelement für das abgeschaltete Dosierrad.

In einer Ausfertigungsform ist vorgesehen, daß die Kupplungselemente als leicht von Hand, vorzugsweise werkzeuglos ein- und herausdrehbare Schrauben ausgebildet sind.

Eine gute und sichere Kupplung der Dosiervorrichtung mit der Dosierwelle wird dadurch erreicht, daß in der Dosierwelle und/oder Hohlwelle Aussparungen und/oder Durchbrüche angeordnet sind. In diesen Aussparungen oder Durchbrüchen greifen dann die Kupplungselemente ein. Um ein schnelles und sicheres Eingreifen der Kupplungselemente in die Dosierwelle zu erreichen, ist vorgesehen, daß an der Dosierwelle zumindest ein Markierungselement angeordnet ist, welches die richtige Kupplungsstellung des Dosierrades auf der Dosierwelle anzeigt, damit die Kupplungselemente mit der Dosierwelle kuppelbar sind.

Eine gute und sicher Abdichtung der Vorratsbehälter zu erreichen, und Fehldosierungen über das stillgestzte Dosierrad zu vermeiden, ist vorgesehen, daß ein zwischen den Zellen des Dosierrades sich befindlicher Zellensteg abdichtend mit der Dichtlippe zusammen wirkt.
Eine einfache Ausbildung der Kupplungselemente wird dadurch erreicht, daß die Kupplungselemente schwenkbar angeordnet sind. Mittels dieser Anordnung der Kupplungselemente ist auf einfachste Weise eine sichere Kupplung der Dosierräder mit der Antriebswelle möglich. Darüber hinaus ist leicht und unverwechselbar festzustellen, ob die Kupplungselemente die Dosierräder mit der Antriebswelle kuppeln oder nicht.

Eine weitere vorteilhafte Ausbildung der schwenkbaren Kupplungselemente wird dadurch erreicht, daß die Kupplungselemente als Schwenkklinken ausgebildet sind und in der Kupplungsstellung mit einer Mitnehmernase in zumindest eine Aussparung der Antriebswelle und/oder mit dieser verbundener Teile eingreifen. Damit die Dosierräder, wenn sie abgeschaltet sind, nicht versehentlich mitdrehen und Material ausbringen, ist vorgesehen, daß in der Entkupplungsstellung die Schwenkklinke an dem Rahmen des Dosiergehäuses oder an diesem selbst zur Anlage kommt. Hierdurch wird ein sicheres Festsetzen der Dosierräder bei deren Abschaltung erreicht. Eine Verbesserung des Festsetzens wird noch dadurch gewährleistet, daß die Schwenkklinke am Rahmen des Dosiergehäuses oder an diesem selbst einrastet.

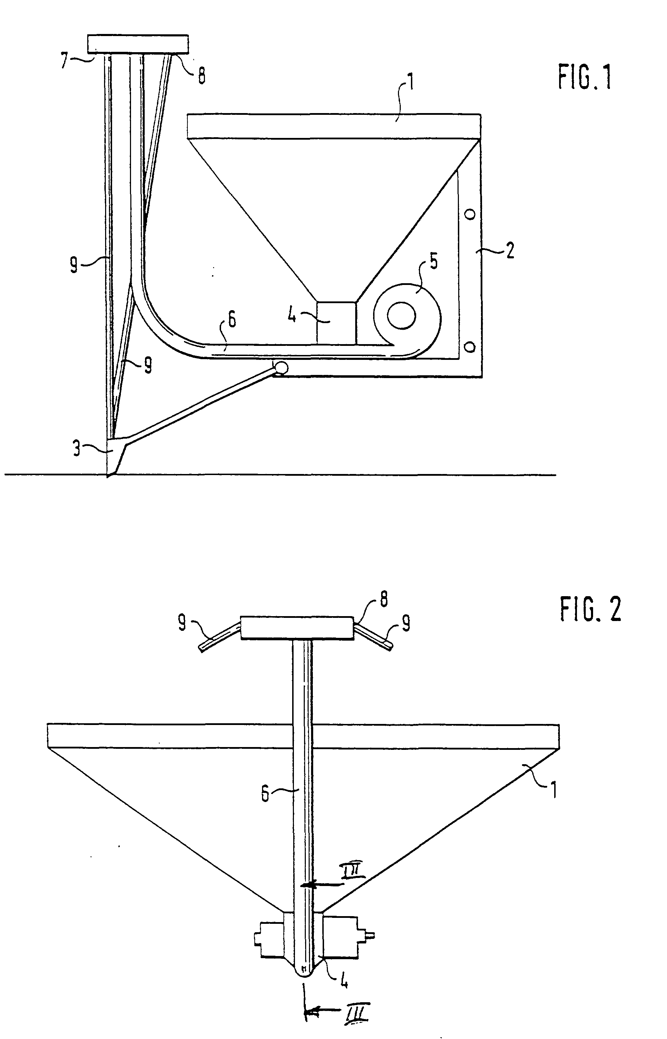

Weitere Einzelheiten der Erfindung sind den übrigen Unteransprüchen, der Beispielsbeschreibung und den Zeichnungen zu entnehmen. Hierbei zeigen
- Fig.1: die pneumatische Verteilmaschine in Seitenansicht und in Prinzipdarstellung,
- Fig. 2: die Verteilmaschine in der Ansicht von hinten und in Prinzipdarstellung,
- Fig. 3: die Dosiervorrichtung in der Ansicht III - III,
- Fig. 4: die Kupplungseinrichtung in vergrößertem Maßstab und in Prinzipdarstellung,
- Fig. 5: die Dosiervorrichtung in der Ansicht V - V,
- Fig. 6: eine weitere Dosiervorrichtung in der Darstellungsweise gemäß Fig. 5
- Fig. 7: eine weitere Dosiervorrichtung in der Darstellungsweise nach Fig. 5 und
- Fig. 8: eine weitere Dosiervorrichtung in der Darstellungsweise nach Fig. 5 in Prinzipdarstellung.

Die pneumatische Verteilmaschine weist den Vorratsbehälter 1, den Rahmen 2 und die an dem Rahmen 2 angelenkten Säschare 3 auf. Das sich im Vorratsbehälter befindliche Material wird über die Dosiervorrichtung 4 über eine Schleuse in die an das Gebläse 5 angeschlossene Förderleitung 6 eingespeist. Über die Förderleitung 6 gelangt das dosierte Material zu dem als Prallkopf 7 ausgebildeten Verteiler, von dem aus das Saatgut auf die einzelnen Auslässe 8, an denen die zu den Säscharen 3 führenden Leitungen 9 angeschlossen sind, aufgeteilt wird.

Unterhalb des Vorratsbehälters ist die Dosiervorrichtung 4 angeordnet. Die Dosiervorrichtung 4 weist ein Dosiergehäuse 10 auf. Das Dosiergehäuse 10 ist an den Anschlußflanschen 11 des Vorratsbehälters 1 befestigt. In dem Dosiergehäuse 10 ist die Dosierwelle 12 gelagert. Auf der Dosierwelle 12 sind die beiden Grob-oder Normaldosierräder 13, 14 und die beiden Feindosierräder 15, 16 angeordnet. Oberhalb der Dosierräder 13, 14, 15, 16 kann in dem Dosiergehäuse 10 eine angetriebene Rührwelle 17 mit Rührelementen angeordnet sein.

Auf der Dosierwelle 12 ist die aus dem Gehäuse 10 herausgeführte Hohlwelle 18, die einstückig mit dem Grob- oder Normaldosierrad 13 verbunden ist, angeordnet. Die Normal- oder Grobdosierräder 13, 14 weisen die Dosierzellen 19 auf.

Auf der Hohlwelle 18 ist die weitere aus dem Gehäuse 10 herausgeführte Hohlwelle 20 angeordnet, die mit dem anderen Normal- oder Grobdosierrad 14 einstückig verbunden ist. Mit dieser Hohlwelle 20 ist der Ringflansch 21 einstückig angeordnet. An dem Ringflansch 21 ist die Schwenkklinke 22 schwenkbar mittels des Schwenkgelenkes 23 angeordnet.

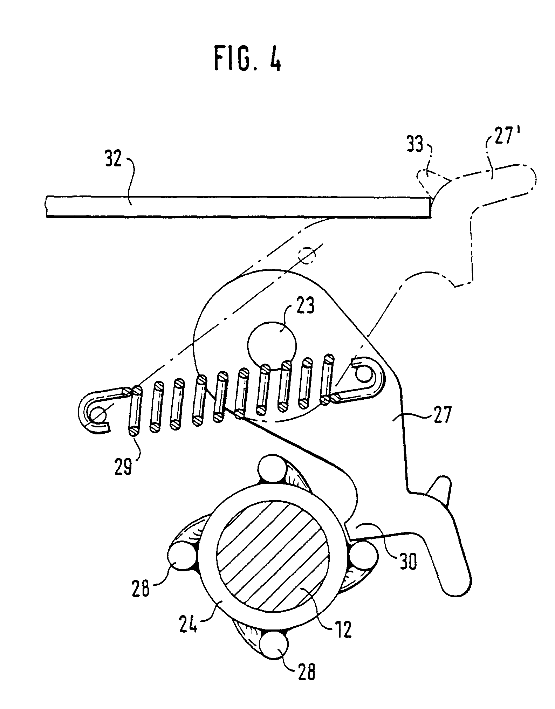

Auf der auf der Dosierwelle 12 frei drehbar angeordneten Hohlwelle 18 ist eine Kupplungsmuffe 24 aufgeschoben, welche über Mitnehmerelemente 25 drehfest mit der Hohlwelle 18 verbunden ist. Die Kupplungsmuffe 24 weist den Ringflansch 26 auf, an dem die Schwenkklinke 27 schwenkbar gelagert ist. Desweiteren ist auf der Dosierwelle 12 das Mitnehmerelement mit den Mitnehmern 28 drehfest angeordnet. Wenn das Grob- oder Normaldosierrad 13 mit der Antriebswelle 12 gekuppelt werden soll, wird die Schwenkklinke 27 in der in Fig. 4 dargestellten Position geschwenkt. Durch die Zugfeder 29 wird die Schwenkklinke 27 in der Position gehalten. Über die auf der als Mitnahmemuffe ausgebildeten Mitnehmerelemente 28 angeordneten Mitnehmer wird über die Schwenkklinke 27 das Normal- oder Grobdosierrad 13 angetrieben. Wenn des weiteren das Normal- oder Grobdosierrad 14 angetrieben werden soll, wird die Schwenkklinke 22 ebenfalls in der in Fig. 4 dargestellten Position gebracht, so daß die Nase 30 der Schwenkklinke 22 in eine der Aussparungen 31 der Hohlwelle 24 greift. Wenn die Grob- oder Normaldosierräder 13, 14 von der Antriebswelle 12 abgekuppelt werden sollen, wird die Schwenkklinke 27 in der in Fig. 4 dargestellten mit gestrichelten Linien angedeuteten Position 27' gebracht, wobei die Schwenkklinke 27 in der Entkupplungsstellung am Rahmen 32 des Dosiergehäuses zur Anlage kommt und mittels der Nase 33 hinter das Gehäuse einrastet.

Desweiteren weist die Dosiervorrichtung die beiden Feindosierräder 15, 16 auf. An jedem Feindosierrad 15, 16 ist wiederum eine einstückig mit dem Dosierrad 15, 16 verbundene Hohlwelle 34, 35 angeordnet. Die Hohlwelle 34 des Feindosierrades 15 ist auf der Dosierwelle 12 angeordnet, während die Hohlwelle 35 des anderen Feindosierrades 16 auf der Hohlwelle 34 des Dosierrades 15 aufgeschoben ist. Die Kupplungselemente 36 mit der Schwenkklinke 37, 38 sind ebenfalls wie die Kupplungselemente 22, 27 für die Grob- und Normaldosierräder 13, 14 ausgebildet.

Die Dosierwelle 12 wird über eine nicht dargestellte Kraftquelle mit einstellbaren Drehzahlen angetrieben, so daß die gewünschte Menge Material ausgebracht werden kann.

Das sich im Vorratsbehälter 1 befindliche Material wird über das Dosierorgan 4 und die Injektorschleuse 39 in die an das Gebläse 5 angeschlossene Förderleitung 6 eingespeist. Die auf der Dosierwelle 12 angeordneten Dosierräder 13, 14, 15, 16 werden von einer nicht dargestellten Kraftquelle in einstellbarer Weise angetrieben, so daß das Material aus dem Vorratsbehälter in dosierter Weise über die Injektorschleuse 39 in die Förderleitung 6 eingespeist wird. Die Injektorschleuse 39 weist im oberen Bereich die Einschleusöffnung 40 auf, über die das dosierte Material in die Injektorschleuse 39 gelangt.

In der unteren Wand 41 der Injektorschleuse 39 ist zwischen dem Injektoreinlaßteil 42 und dem Diffusorteil 43 eine Öffnung 44 angeordnet, die durch eine Abdeckung 45 verschlossen ist. Die Abdeckung 45 ist an dem Injektoreinlaßteil 42 angeordnet. Das Injektoreinlaßteil 42 ist drehbar an dem Gehäuse 46 des Injektors 39 angeordnet. Das Injektoreinlaßteil 42 ist um die Mittelachse 47 des Injektors 39 in zumindest zwei gegenüberliegenden Positionen verdrehbar. Das Injektoreinlaßteil 42 mit der Abdeckung 45 wird über eine nicht dargestellte Rasteinrichtung für das Ausbringen des Materials auf dem Feld in der dargestellten Position festgelegt. In dieser Position deckt die Abdeckung 45 die Öffnung 44 ab, so daß das Material von dem in Pfeilrichtung 48 strömenden Luftstrom erfaßt und über die Förderleitung 6 dem Prallkopf 7 zugeführt wird. Wenn die Abdrehprobe durchgeführt werden soll, wird der Gebläseantrieb abgeschaltet und das Injektoreinlaßteil 42 mit der Abdeckung 44 um 180 Grad verdreht. In dieser oberen Position befindet sich die Abdeckung 44 zur Durchführung der Abdrehprobe oberhalb der Durchtrittsöffnung des Injektors, so daß das dosierte Material durch die Abdeckung 44 an dem Förderweg der Injektorschleuse 39 vorbeigeleitet wird. Das Material gelangt dann an der Abdeckung 44 vorbei durch den sich zwischen dem Injektoreinlaßteil 42 und dem Diffusor 43 befindlichen Raum 49 und durch die Öffnung 44 in ein unterhalb der Öffnung 44 sich befindlichen, jedoch nicht dargestellten Auffangbehälter. Nach Beendigung der Abdrehprobe wird der Injektoreinlaßteil 42 mit der Abdeckung 45 wieder in die dargestellte Position verdreht, so daß die Abdeckung 45 die Öffnung 44 verschließt bzw. abdeckt.

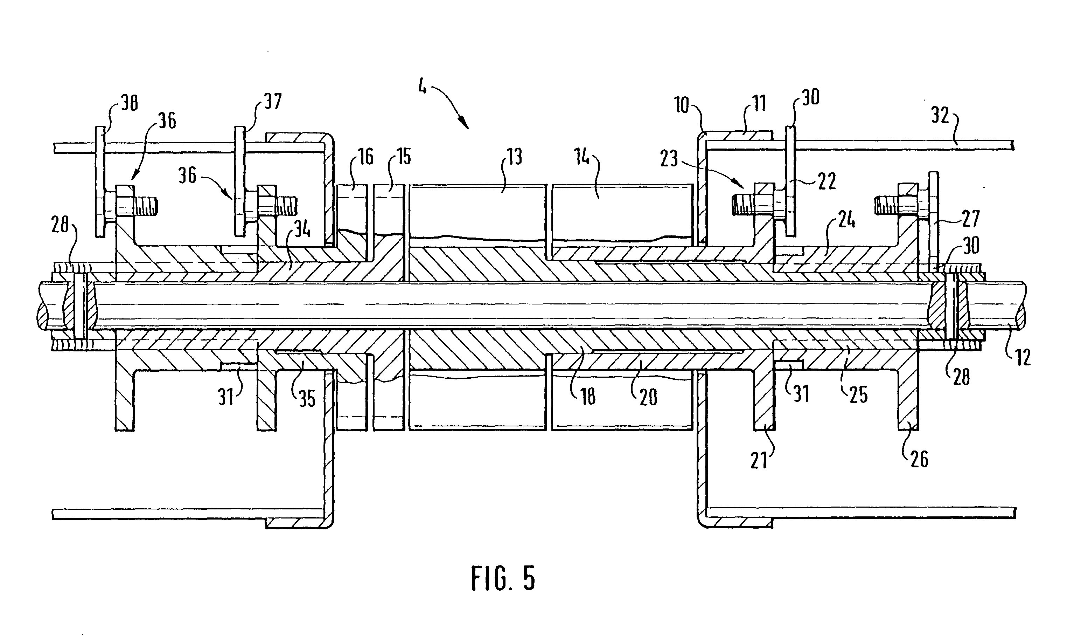

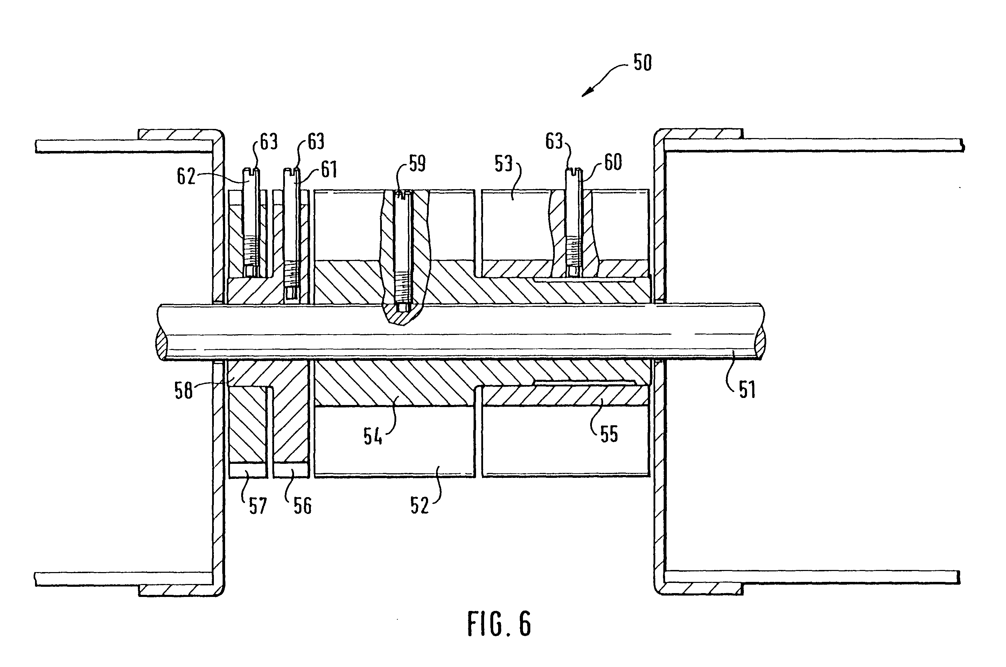

Die Dosiervorrichtung gemäß Fig. 6 unterscheidet sich durch eine andere Ausbildung der Kupplungseinrichtung von der Dosiervorrichtung nach Fig. 5. Diese Dosiervorrichtung weist das Dosiergehäuse 50 auf, in welchem die Dosierwelle 51 gelagert ist. Auf der Dosierwelle 51 sind die beiden Grob- oder Normaldosierräder 52, 53 angeordnet. An dem Grob- oder Normaldosierrad 52 ist die mit dem Grob-oder Normaldosierrad 52 einstückig verbundene Hohlwelle 54 angeordnet. Auf der Hohlwelle 54 ist das Grob- oder Normaldosierrad 53 mit der Hohlwelle 55 frei drehbar angeordnet. Desweiteren sind auf der Dosierwelle 51 die beiden Feindosierräder 56, 57 angeordnet. Die mit dem Feindosierrad 56 einstückig verbundene Hohlwelle 58 ist auf der Dosierwelle 51 frei drehbar gelagert. Desweiteren ist auf dieser Hohlwelle 58 das Feindosierrad 57 frei drehbar gelagert.

Den Grob- oder Normaldosierrädern 52, 53 sowie den Feindosierrädern 56, 57 ist jeweils ein Kupplungselement 59, 60, 61, 62 zugeordnet, welches in radialer Richtung zum Ein- und Abschalten der Dosierräder 52, 53, 56, 57 verlagerbar ist. Dieses Kupplungselement 59, 60, 61, 62 ist als Stiftschraube ausgebildet. Durch Hineindrehen der Stiftschraube 59, 61 läßt sich eine drehfeste Verbindung zwischen dem Dosierrad 52, 56 und der Dosierwelle 51 herstellen, so daß die Dosierräder 52, 56 mit der Dosierwelle 51 gekuppelt werden können.

Die auf der Hohlwelle 54, 58 drehbar angeordneten Dosierräder 53, 57 können ebenfalls mittels der Stiftschraube 60, 62 über die Hohlwelle 54, 58 mit der Dosierwelle 51 kraftschlüssig gekuppelt werden.

Um sicherzustellen, daß die Dosierräder 52, 53, 56, 57, wenn sie abgeschaltet sind, nicht mitdrehen und so ungewünscht Material ausbringen, kommen die aus dem Dosierrad herausgedrehten Enden 63 der Kupplungsschrauben 59, 60, 61, 62 an Teilen des Dosiergehäuses zur Anlage, so daß sichergestellt ist, daß die Dosierräder sich nicht unerwünscht mitdrehen.

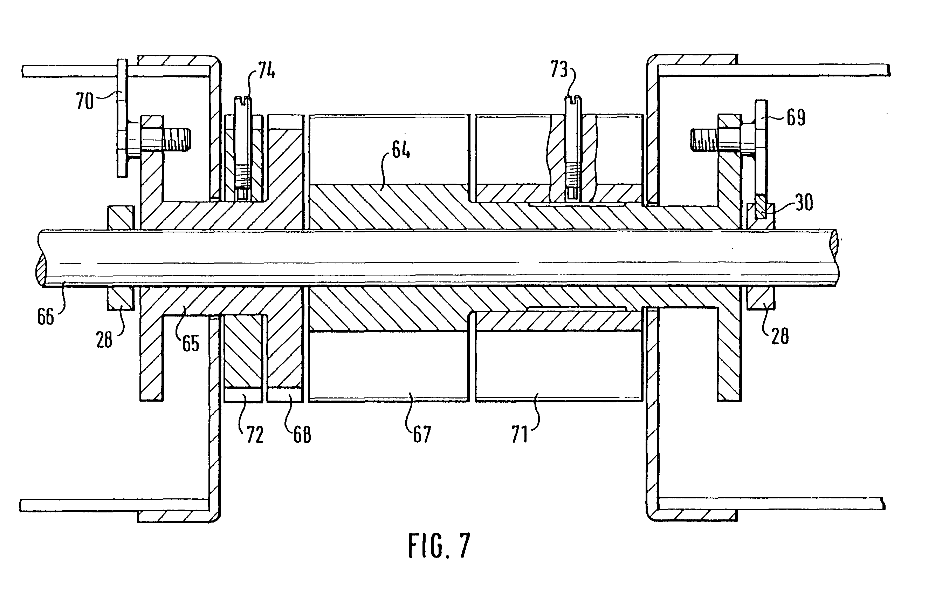

Die Dosiervorrichtung gemäß Fig. 7 unterscheidet sich von den vorhergehenden Dosiervorrichtungen dadurch, daß das mittels der Hohlwelle 64, 65 unmittelbar auf der Dosierwelle 66 angeordnete Grob- bzw. Feindosierrad 67, 68 mittels der Schwenkklinke 69, 70 entsprechend der Dosiervorrichtung gemäß Fig. 5 mit der Dosierwelle 66 kuppelbar ist, während die auf den Hohlrwellen 64, 65 angeordneten Dosierräder 71, 72 mittels der Kupplungsschraube 73, 74 mit der Hohlwelle 64, 65 und somit mit der Dosierwelle 66 kuppelbar sind.

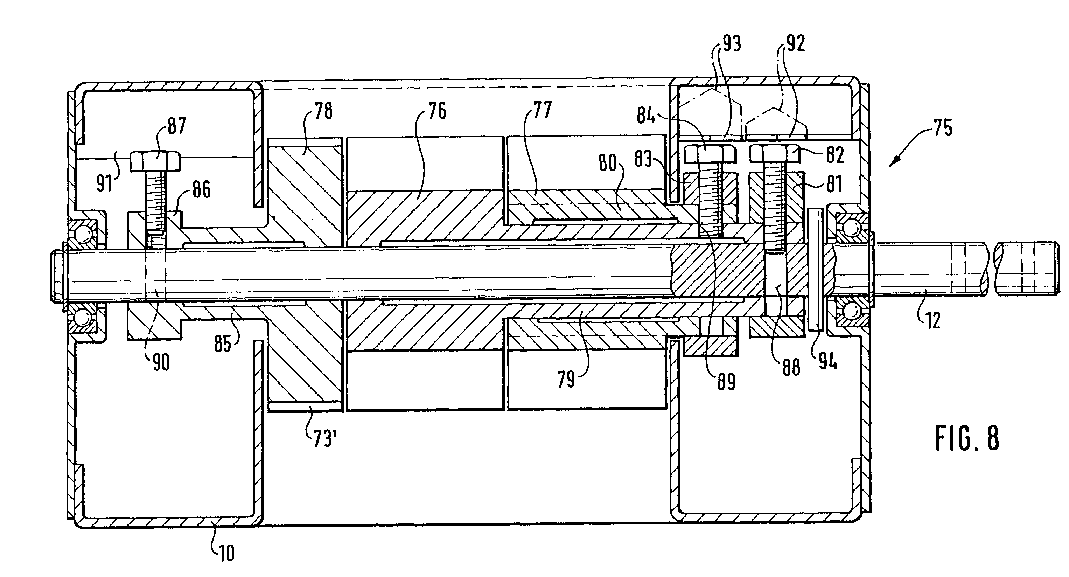

Die Fig. 8 zeigt die weitere Dosiervorrichtung 75. Die Dosiervorrichtung 75 weitst das Dosiergehäuse 10 auf. Das Dosiergehäuse 10 ist mittels Anschlußflanschen an einem Vorratsbehälter zu befestigen. In dem Dosiergehäuse 10 ist die Dosierwelle 12 gelagert. Auf der Dosierwelle 12 sind die beiden Grob- und Normaldosierräder 76 und 77und das Feindosierrad 78 angeordnet.

An dem Normaldosierrad 76 ist eine Hohlwelle 79 angeordnet. Diese Hohlwelle 79 ist als Hals und nach außerhalb des Dosiergehäuses 10 ragend ausgebildet. Der Hals 79 ist einstückig mit dem Dosierrad 76 verbunden. Auf dem Hals 79 ist eine weitere Hohlwelle 80, die ebenfalls als Hals und nach außerhalb des Dosiergehäuses 10 ragend ausgebildet und mit dem Dosierrad 77 einstückig verbunden ist. An dem Hals 79 des Dosierrades 76 ist das Kupplungsgehäuse 81 angeordnet. In dem Kupplungsgehäuse 81 ist das als Schraube 82 ausgebildete Kupplungsglied angeordnet. Auf dem Hals 80 des Dosierrades 77 ist mittels einer formschlüssigen Verbindung das Kupplungsgehäuse 83 angeordnet, in welchem das als Schraube 84 ausgebildete Kupplungselement angeordnet ist.

An dem Feindosierrad 78 ist die Hohlwelle 85 angeordnet, welche als Hals und nach außerhalb des Dosiergehäuses 10 ragend ausgebildet ist. An dem Hals 85 ist das Kupplungsgehäuse 86 angeordnet, in dem das als Schraube 87 ausgebildete Kupplungselement angeordnet ist.

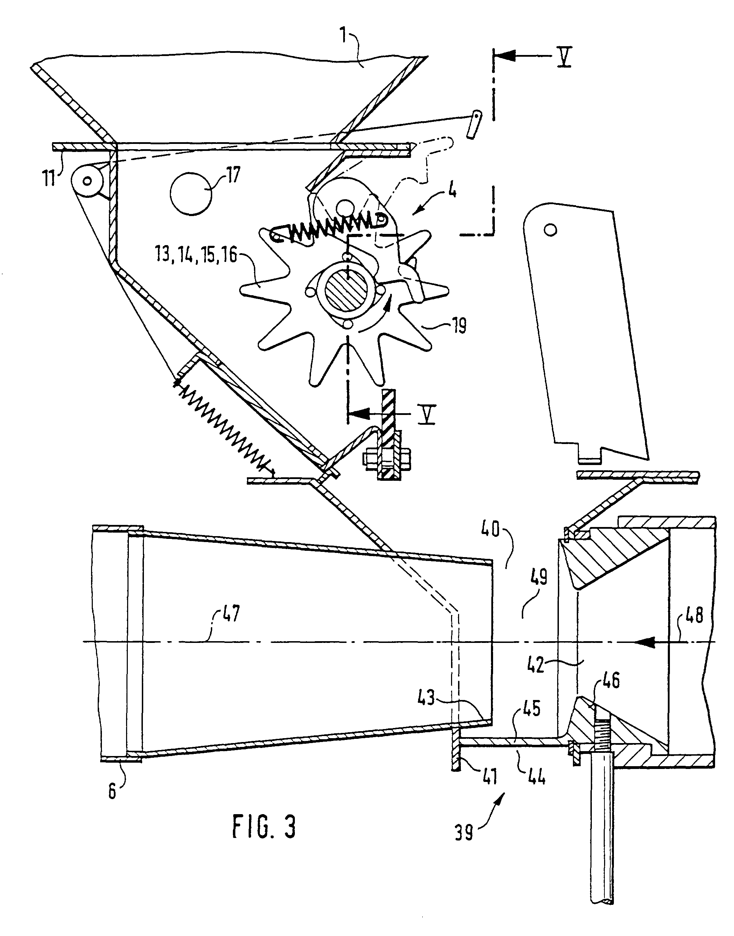

In der in Fig. 8 dargestellten Anordnung der Kupplungselemente sind die beiden Normal- und Grobdosierräder 76 und 77 mit der Dosierwelle 12 gekuppelt. Hierzu faßt die Schraube 82 in die in der Dosierwelle 12 angeordnete als Bohrung 88 ausgebildete Aussprarrung, während die Schraube 84 in die in dem Hals 79 angebrachte und als Bohrung ausgebildete Aussparrung 89 faßt. Das Feindosierrad 78 ist von der Dosierwelle 12 abgekuppelt, weil die Schraube 87 aus der Mitnahmebohrung 90 in der Dosierwelle 12 herausgedreht ist. Damit der Steg 73', wie in Fig. 3 gezeigt überlappend zu der Dichtlippe 45' steht, ist an dem Dosiergehäuse 10 ein Anschlag 91 angeordnet, der das Dosierrad 78 in dieser Position festsetzt.

Ebenfalls sind für die Normal- und Grobdosierräder 77 und 78 an dem Dosiergehäuse 10 Anschläge 92 und 93 vorgesehen, an welchem in herausgezogener Position die Schrauben 82 und 84 zur Anlage kommen und die Stege 73 der Grob- und Normaldosierräder 77 und 78 in einer Position festsetzten, mit welchem ein Steg 73 des Normaldosierrades 77 und 78 mittels der Dichtlippe 45' überlappend zusammenwirkt, wie Fig. 3 zeigt. Die Normal- und Grobdosierräder 77 und 78 sind derart mit der Dosierwelle 12 kuppelbar, daß die Zellen um eine halbe Zellenteilung zueinander versetzt sind. Um denn noch, wenn die Dosierräder 77 und 78 stillgesetzt und von der Dosierwelle 12 abgekuppelt sind, zu erreichen, daß die Stege 73 überlappend zu der Dichtlippe 45' stehen bleiben sind die Anschlagelemente 92 und 93 versetzt zueinander angeordnet. Um dieses zu verdeutlichen, sind in Fig. 8 die Anschlagelemente 92 und 93 aus der normalen Position, welche mit durchgezogenen Linien dargestellt ist, in die mit strichpunktierten Linien dargestellte Position eingezeichnet.

In der Welle 12 ist der Markierungsstift 94 angeordnet, der zumindest annähernd parallel zu der der Bohrung 88 verläuft. Somit ist eine leichte Orientierung und Markierung gegeben, um die Schraube 82 in die Bohrung 88 drhen zu können. Um die Schraube 84 in die Bohrung 89 drehen zu können, müssen die Schrauben 82 und 84 zur Parallelstellung gebracht werden. Die Bohrung 90 ist zumindest annähernd parallel zu dem Stift 94 angeordnet, so daß zum Hineindrehen der Schraube 87 in die Bohrung 90 die Schraube 87 in Parallelstellung zu dem Stift 94 gebracht werden muß.

## Patentansprüche

1. Dosiervorrichtung für eine Verteilmaschine, wie Sämaschine oder Düngerstreuer, mit zumindest zwei Säräder, welche drehbar in einem Gehäuse gelagert und mittels einer Dosierwelle antreibbar, sowie mittels Kupplungselementen wahlweise mit der Dosierwelle kuppelbar sind, dadurch gekennzeichnet, daß die den Dosierrädern (13, 14, 15, 16, 52, 53, 56,57, 67, 68, 71) zugeordneten Hohlwellen (18, 20, 34, 35, 54, 55, 58, 64, 65) einstückig mit den Dosierrädern verbunden sind.

2. Dosiervorrichtung nach Anspruch 1, dadurch gekennzeichnet, daß das Antriebselement des einen Dosierrades einstückig mit der Hohlwelle verbunden ist.

3. Dosiervorrichtung nach Anspruch 1, dadurch gekennzeichnet, daß die den Dosierrädern (52, 53, 56, 57, 71, 72) zugeordneten Hohlwellen (18, 65) als Hälse und nach außerhalb des Dosiergehäuses (10) ragend ausgebildet sind und hier mit Kupplungselementen (22, 70) mit der Dosierwelle kuppelbar sind.

4. Dosiervorrichtung nach Anspruch 1, dadurch gekennzeichnet, daß zumindest einem oder jedem Dosierrad (52, 53, 56, 57, 71, 72) ein Kupplungselement (59, 60, 61, 62) zugeordnet ist, welches in radialer Richtung zum Ein- und Abschalten des Dosierrades verschiebbar oder verlagerbar ist.

5. Dosiervorrichtung nach Anspruch 4, dadurch gekennzeichnet, daß das Kupplungselement (59, 60, 61, 62) als Stiftschraube ausgebildet ist.

6. Dosiervorrichtung nach einem oder mehreren der vorstehenden Ansprüche, dadurch gekennzeichnet, daß die Kupplungselemente als leicht von Hand, vorzugsweise werkzeuglos ein- und herausdrehbare Schrauben (61,62,73,74) ausgebildet sind.

7. Dosiervorrichtung nach einem oder mehreren der vorstehenden Ansprüche, dadurch gekennzeichnet, daß in der Dosierwelle (12) und/oder Hohlwelle (79) Aussparungen (88, 89, 90) und/oder Durchbrüche angeordnet sind, daß in diese Aussparungen (88, 89, 90) und Durchbrüche die Kupplungselemente (82, 84, 87) zum Kuppeln des betreffenden Dosierrades (76, 77, 78) mit der Dosierwelle (12) eingreifbar ausgebildet sind

8. Dosiervorrichtung nach einem oder mehrenen der vorstehenden Ansprüche, dadurch gekennzeichnet, daß an der Dosierwelle (12) zumindest ein Markierungselement (94) angeordnet ist, welches die richtige Kupplungsstellung des Dosierrades (76, 77, 78) auf der Dosierwelle (12) anzeigt, damit die Kupplungselemente (82, 84, 87) mit der Dosierwelle (12) kuppelbar sind.

9. Dosiervorrichtung nach Anspruch 7, dadurch gekennzeichnet, daß das Kupplungselement (59, 60, 61, 62) als Schiebestift ausgebildet ist.

10. Dosiervorrichtung nach einem oder mehreren der vorstehenden Ansprüche, dadurch gekennzeichnet, daß zumindest zwei nebeneinander angeordnete Dosierräder (67, 71, 68, 72) vorgesehen sind, daß dem einem der Dosierräder (67, 68) eine Hohlwelle (64, 65) zugeordnet ist, daß auf dieser Hohlwelle (64, 65) das andere Dosierrad (71, 72) drehbar angeordnet ist, daß das auf der Hohlwelle (64, 65) angeordnete Dosierrad (71, 72) mittels des Kupplungselementes (73, 74) mit der Hohlwelle (64, 65) kuppelbar ist.

11. Dosiervorrichtung nach einem oder mehreren der vorstehenden Ansprüche, dadurch gekennzeichnet, daß die Kupplungselemente mit Vorrichtungselementen derart zusammenwirkend ausgebildet sind, daß die sich in Ausschaltposition befindlichen Kupplungselemente die abgeschalteten Dosierräder in einer derartigen Position festsetzen oder fixieren, daß ein zwischen den Zellen des Dosierrades sich befindlicher Zellensteg abdichtend mit der Dichtlippe zusammenwirkt.

12. Dosiervorrichtung nach Anspruch 1, dadurch gekennzeichnet, daß die Kupplungselemente (22, 27, 37, 38, 69, 70) schwenkbar angeordnet sind.

13. Dosiervorrichtung nach Anspruch 1, dadurch gekennzeichnet, daß die Kupplungselemente als Schwenkklinke (22, 27, 37, 38, 69, 70) ausgebildet sind und in der Kupplungsstellung mit einer Mitnehmernase (30) in zumindest eine Aussparung (28, 31) der Antriebswelle (12, 51, 66) und/oder mit dieser verbundener Teile eingreifen.

14. Dosiervorrichtung nach einem oder mehreren der vorstehenden Ansprüche, dadurch gekennzeichnet, daß in der Entkupplungsstellung die Schwenkklinke (22, 27, 37, 38, 69, 70) an dem Rahmen (32) des Dosiergehäuses zur Anlage kommt.

15. Dosiervorrichtung nach einem oder mehreren der vorstehenden Ansprüche, dadurch gekennzeichnet, daß die Schwenkklinke (22, 27, 37, 38, 69, 70) am Rahmen des Dosiergehäuses einrastet.

## Claims

1. Metering apparatus for a distributing machine, such as a seed drill or fertiliser spreader, having at least two sowing wheels, which are rotatably mounted in a housing and are drivable by means of a metering shaft, and said wheels are selectively connectable to the metering shaft by means of coupling members, characterised in that the hollow shafts (18, 20, 34, 35, 54, 55, 58, 64, 65), associated with the metering wheels (13, 14, 15, 16, 52, 53, 56, 57, 67, 68, 71), are integrally connected to the metering wheels.

2. Metering apparatus according to claim 1, characterised in that the driving member of one metering wheel is integrally connected to the hollow shaft.

3. Metering apparatus according to claim 1, characterised in that the hollow shafts (18, 65), associated with the metering wheels (52, 53, 56, 57, 71, 72), are configured as necks and protrude outwardly from the metering housing (10), and here they are connectable to the metering shaft by coupling members (22, 70).

4. Metering apparatus according to claim 1, characterised in that there is associated with at least one or each metering wheel (52, 53, 56, 57, 71, 72) a coupling member (59, 60, 61, 62) which is displaceable or shiftable in a radial direction for switching the metering wheel on and off.

5. Metering apparatus according to claim 4, characterised in that the coupling member (59, 60, 61, 62) is configured as a stud bolt.

6. Metering apparatus according to one or more of the preceding claims, characterised in that the coupling members are configured as screws (61, 62, 73, 74), which can easily be tightened or released by hand, preferably without any tools.

7. Metering apparatus according to one or more of the preceding claims, characterised in that recesses (88, 89, 90) and/or openings are provided in the metering shaft (12) and/or hollow shaft (79), and in that the coupling members (82, 84, 87) are adapted to be engageable in these recesses (88, 89, 90) and openings to connect the pertinent metering wheel (76, 77, 78) to the metering shaft (12).

8. Metering apparatus according to one or more of the preceding claims, characterised in that at least one marker (94) is disposed on the metering shaft (12) and indicates the correct coupling position of the metering wheel (76, 77, 78) on the metering shaft (12), so that the coupling members (82, 84, 87) can be connected to the metering shaft (12).

9. Metering apparatus according to claim 7, characterised in that the coupling member (59, 60, 61, 62) is configured as a slide pin.

10. Metering apparatus according to one or more of the preceding claims, characterised in that at least two metering wheels (67, 71, 68, 72) are provided, which are disposed adjacent each other, in that a hollow shaft (64, 65) is associated with one of the metering wheels (67, 68), in that the other metering wheel (71, 72) is rotatably disposed on this hollow shaft (64, 65), and in that the metering wheel (71, 72), disposed on the hollow shaft (64, 65), is connectable to the hollow shaft (64, 65) by means of the coupling member (73, 74).

11. Metering apparatus according to one or more of the preceding claims, characterised in that the coupling members are adapted to co-operate with apparatus members in such a manner that the coupling members, in the switched-off position, lock or fix the switched-off metering wheels in such a position that a cell web, situated between the cells of the metering wheel, co-operate sealingly with the sealing lip.

12. Metering apparatus according to claim 1, characterised in that the coupling members (22, 27, 37, 38, 69, 70) are pivotably disposed.

13. Metering apparatus according to claim 1, characterised in that the coupling members are configured as pivotal pawls (22, 27, 37, 38, 69, 70) and, in the coupling position with an entrainment projection (30), they engage in at least one recess (28, 31) of the drive shaft (12, 51, 66) and/or in parts which are connected to said drive shaft.

14. Metering apparatus according to one or more of the preceding claims, characterised in that the pivotal pawl (22, 27, 37, 38, 69, 70), in the disconnected position, abuts against the frame (32) of the metering housing.

15. Metering apparatus according to one or more of the preceding claims, characterised in that the pivotal pawl (22, 27, 37, 38, 69, 70) locks in position on the frame of the metering housing.

## Revendications

1. Dispositif de dosage pour une machine distributrice telle qu'un semoir ou un épandeur d'engrais ayant au moins deux roues à semence montées à rotation dans un boîtier et entraînées par un arbre de dosage ainsi que des éléments de couplage qui permettent de les coupler sélectivement à l'arbre de dosage,
caractérisé en ce que
les roues de dosage (13, 14, 15, 16, 52, 53, 56, 57, 67, 68, 71) sont reliées en une seule pièce avec leur arbre de dosage creux (18, 20, 34, 35, 54, 55, 58, 64, 65).

2. Dispositif de dosage selon la revendication 1,
caractérisé en ce que
l'élément d'entraînement d'une roue de dosage fait corps avec l'arbre creux.

3. Dispositif de dosage selon la revendication 1,
caractérisé en ce que
les arbres creux (18, 65) associés aux roues doseuses (52, 53, 56, 57, 71, 72) sont des cols et dépassent du boîtier de dosage (10) en pouvant être couplés à cet endroit par des éléments de couplage (22, 70) à l'arbre de dosage.

4. Dispositif de dosage selon la revendication 1,
caractérisé en ce que
un élément de couplage (59, 60, 61, 62) est associé à au moins une ou à chaque roue de dosage (52, 53, 56, 57, 71, 72), cet élément de couplage pouvant coulisser ou se déplacer dans la direction radiale pour brancher et/ou coupler la roue de dosage.

5. Dispositif de dosage selon la revendication 4,
caractérisé en ce que
l'élément de couplage (59, 60, 61, 62) est en forme de broche filetée.

6. Dispositif de dosage selon une ou plusieurs revendications précédentes,
caractérisé en ce que
les éléments de couplage se manoeuvrent facilement à la main de préférence sans outil et sont des vis que l'on peut vis-ser ou dévisser (61, 62, 73, 74).

7. Dispositif de dosage selon une ou plusieurs revendications précédentes,
caractérisé en ce que
l'arbre de dosage (12) et/ou l'arbre creux (79) comporte des découpes (88, 89, 90) et/ou des passages et ces découpes ou passages reçoivent les éléments de couplage (82, 84, 87) pour coupler la roue de dosage (76, 77, 78) correspondant à l'arbre de dosage (12).

8. Dispositif de dosage selon une ou plusieurs revendications précédentes,
caractérisé en ce que
l'arbre de dosage (12) comporte au moins un élément de marquage (94) indiquant la position de couplage correcte de la roue de dosage (76, 77, 78) sur l'arbre de dosage (12) pour permettre de coupler les éléments de couplage (82, 84, 87) à l'arbre de dosage (12).

9. Dispositif de dosage selon la revendication 7,
caractérisé en ce que
l'élément de couplage (59, 60, 61, 62) est une broche coulissante.

10. Dispositif de dosage selon une ou plusieurs des revendications précédentes,
caractérisé en ce qu'
au moins deux roues de dosage (67, 71, 68, 72) juxtaposées sont prévues de façon qu'un arbre creux (64, 65) est associé à la première roue doseuse (67, 68), cet arbre creux (64, 65) porte à rotation l'autre roue de dosage (71, 72), et la roue de dosage (71, 72) prévue sur l'arbre creux 64, 65) peut être couplée par l'élément de couplage (73, 74) à l'arbre creux (64, 65).

11. Dispositif de dosage selon une ou plusieurs revendications précédentes,
caractérisé en ce que
les éléments de couplage coopèrent avec des dispositifs de façon telle que lorsque les éléments de couplage sont en position de découplage, les roues de dosage couplées soient fixées ou bloquées dans leur position respective, pour qu'une entretoise d'alvéoles prévue entre les alvéoles de la roue de dosage coopère de manière étanche avec la lèvre d'étanchéité.

12. Dispositif de dosage selon la revendication 1,
caractérisé en ce que
les éléments de couplage (22, 27, 37, 38, 69, 70) sont montés pivotants.

13. Dispositif de dosage selon la revendication 1,
caractérisé en ce que
les éléments de couplage sont des verrous pivotants (22, 27, 37, 38, 69, 70) et en position de couplage ils pénètrent avec un bec d'entraînement (30) dans au moins une découpe (28, 31) de l'arbre d'entraînement (12, 51, 66) et/ou une pièce reliée à celui-ci.

14. Dispositif de dosage selon une ou plusieurs revendications précédentes,
caractérisé en ce que
le verrou pivotant (22, 27, 37, 38, 69, 70) vient en appui contre le châssis (32) du boîtier de dosage en position découplée.

15. Dispositif de dosage selon une ou plusieurs revendications précédentes,
caractérisé en ce que
le verrou pivotant (22, 27, 37, 38, 69, 70) s'accroche dans le châssis du boîtier de dosage.
